# EUROPEAN PATENT SPECIFICATION

(11) **EP 2 497 360 B1**
(45) Date of publication and mention of the grant of the patent: **11.05.2016**
(21) Application number: 11157723.5
(22) Date of filing: 10.03.2011
(51) Int. Cl.: A01K 5/02, A01K 11/00

(54) **System and method for individually checking and feeding animals without (working) identification label**
System und Verfahren zur individuellen Überprüfung und Fütterung von Tieren ohne (funktionierendes) Identifikationsetikett
Système et procédé pour vérifier et nourrir individuellement des animaux sans étiquette d'identification (fonctionnelle)

(43) Date of publication of application: 12.09.2012
(73) Proprietor: N.V. Nederlandsche Apparatenfabriek NEDAP, 7141 DC Groenlo (NL)
(72) Inventor: Van Brandenburg, Wilhelmus A. B. M., 7141 DC Groenlo (NL)
(74) Representative: V.O.

(56) References cited:
- WO-A1-84/01688
- WO-A1-03/039247
- US-A- 3 929 277

## Description

The invention relates to a system for individually checking animals which may each be provided with an identification label, wherein the system is provided with at least a read-out device for generating an electromagnetic interrogation field and registering a response signal generated by an identification label when the label is in the interrogation field, wherein the system is further provided with at least an automatic feeder for feeding an animal and a control system which is communicatively coupled with the read-out device and the automatic feeder, wherein the control system is so configured that it controls the automatic feeder for dispensing feed when, at least, an identification label has been detected by the read-out device. The invention also relates to a method for individually checking animals. The response signal may comprise, for example, an identification code of the respective animal.

Such a system is known from NL1016835C.

With the aid of the read-out device and the identification label it can be determined what animal is at the automatic feeder. Thereupon, with the aid of the control system, depending on, for example, how much feed or how many feeding turns the individual animal has already had, feed can be presented to the individual animal. If it is desired for the individual animal not to get any feed at a certain time, for example because it has already had a feeding turn recently, it is possible by means of the control system to prevent feed being presented from the automatic feeder to the animal. Thus, per individual animal a suitable amount of feed can be presented.

In practice, however, it may happen that the identification label becomes faulty, that an animal loses the identification label or that (for instance, by mistake) no identification label is affixed to the animal. In that case, no feed will be presented to the individual animal, because no identification label is read out. This can easily lead to frustration on the part of the animal. The unrest resulting from this may even spread to other animals. Such frustration and unrest are undesirable for the animals and moreover can adversely affect production results of the animal or the animals.

Some systems suggested already solutions to similar problems, such as in documents US-3929277 and WO84/01688.

It is therefore an objective of the invention to provide a system with which dispensing of feed can be improved.

To this end, the invention provides a system for individually checking animals which may each be provided with an identification label, wherein the system is provided with at least a read-out device for generating an electromagnetic interrogation field and registering a response signal generated by an identification label when the label is in the interrogation field, wherein the system is further provided with at least an automatic feeder for feeding an animal and a control system which is communicatively coupled with the read-out device and the automatic feeder, wherein the control system is so configured that it controls the automatic feeder for dispensing feed when, at least, an identification label has been detected by the read-out device, wherein the system is furthermore provided with detection means for detecting a presence of the animal, wherein the control system is further communicatively coupled with the detection means and is so configured that it controls the automatic feeder for dispensing feed also when the animal has been detected by the detection means and no identification label has been detected by the read-out device. As the detection means can still detect the animal in case the read-out device does not detect an animal, at least, not an identification label, the animal will still be presented a portion of feed, for example, in a standard amount. This additional check with the aid of the detection means can prevent the animal not getting any feed when the identification label of the animal is faulty or missing.

The control system may be so configured that it controls the automatic feeder for dispensing feed to the animal in response to the presence of the animal, which presence can have been detected with the aid of the identification means and/or with the aid of the read-out device.

A combination of an example of the detection means and an example of the read-out device in a checking system is known per se from NL1019296C

With the checking system of NL 1,019,296 C an animal without an identification label or with a non-working identification label can be distinguished from animals provided with a working identification label. However, NL 1,019,296 C does not disclose that with such a checking system an automatic feeder can be controlled, let alone how a control of an automatic feeder can be improved.

Dispensing of the feed may partly overlap in time with detection of the animal with the aid of the read-out device or with detection of the animal with the detection means, but this is not requisite. Preferably, the control system is so configured that dispensing of feed to the animal takes place after detection of the animal with the aid of the read-out device and/or after detection of the animal with the aid of the detection means.

Preferably, the detection means are separate from the read-out device. However, the detection means and the read-out device may also be integrated. Thus, antennas of the read-out device and the detection means may be integrated. It may then be that the interrogation field transmitted by the read-out device is disturbed by the presence of the animal. This disturbance can then also be measured with the aid of the antenna of the read-out device with which the interrogation field is transmitted. Accordingly, in that case the detection means comprise the antenna of the read-out device and a receiver coupled thereto for detecting the disturbance of the interrogation field by the presence of the animal in the interrogation field. The disturbance may result, for example, in a change of the amplitude of the transmitted interrogation field, which amplitude change is measured by the receiver mentioned and then confirms the presence of an animal.

Preferably, the detection means are configured for detection other than with the aid of generating an electromagnetic interrogation field and registering a response signal generated by an identification label when the label is in the interrogation field. Thus, an animal with a faulty or missing identification label can yet be detected by the detection means. Preferably, the detection means are based on a different physical principle than the read-out device. Thus, the detection means may be relatively insensitive to disturbances to which the read-out device is sensitive, and the other way around. In this way, feed supply to the animals can be made more reliable.

In an embodiment, the control system is so configured that it controls the automatic feeder for dispensing feed in response to detection by the detection means merely when an animal has been detected by the detection means and no identification label has been detected by the read-out device. For example, with the aid of software of the control system, it can be seen in time whether any identification code of a label of the animal has been detected. When an identification label is detected, in this embodiment the control of the automatic feeder may be independent of the possible detection of the animal by the detection means.

In another embodiment, the control system is so configured that it controls the automatic feeder for dispensing feed in response to detection by the detection means also when an identification label has been detected by the read-out device. In this embodiment, the control system may be so configured, for example, that in use it combines detection data obtained with the aid of the detection means with label data obtained with the aid of the read-out device, for the purpose of controlling the automatic feeder.

It will be clear that the invention is not limited to embodiments mentioned.

Preferably, the read-out device is configured to detect an identification label of an animal which is at the automatic feeder. With the animal being already at the automatic feeder, a chance of another animal eating up the feed is reduced.

In an embodiment, the read-out device, in use, generates the interrogation field over dimensions within which, in the presence of an animal at the automatic feeder for eating from the automatic feeder, an identification label of the animal will be located. The reliability of the detection of the identification label can thereby be augmented.

In an embodiment, the read-out device is configured to generate an interrogation field at the automatic feeder for detecting an identification label of an animal which is at the automatic feeder.

In an embodiment, the read-out device is configured to generate an interrogation field in or above the trough of the automatic feeder. As a result, in use, the feed can be furnished to the right animal with relatively high certainty, because the identification label, and hence the animal, is already in or above the trough at the time of detection.

Preferably, the detection means are configured to detect the presence of an animal at the automatic feeder. With the animal being already at the automatic feeder, a chance that another animal eats up the feed is reduced. Accordingly, in use, a chance that another animal than an animal with a faulty or missing identification label eats up the feed can be reduced.

In an embodiment, the detection means are configured to detect the presence of an animal at the automatic feeder when the head of an animal is located in or above a trough of the automatic feeder. Thus, in use, the feed can be furnished with a relatively high certainty to the right animal, i.e., an animal having a faulty identification label.

Preferably, the detection means are arranged to detect the presence of an animal in the interrogation field. This augments a chance of the detection means and the read-out device being directed towards one and the same animal.

Preferably, the system is further provided with distinguishing means which are configured to distinguish an animal which has been detected with the aid of the detection means as being located in the interrogation field and from which no response signal is received by the read-out device. With the aid of these distinguishing means, an animal having a faulty or missing identification label can be distinguished. It can thereby be made clear which animals need to be provided with a new or repaired identification label.

In an embodiment, the distinguishing means comprise a controllable gate with which an animal, for the purpose of distinguishing the animal, can be guided to a distinction space. Preferably, from the distinction space the automatic feeder is inaccessible to the animal. This can prevent a situation where the animal, while its label, for example, is faulty or missing or cannot be properly read out for some other reason, is given a portion of feed from the automatic feeder once again.

In an embodiment, the distinguishing means comprise first spray means with which an animal, for distinguishing the animal, may be provided with a colored spray.

In an embodiment, the read-out device is provided with a checking unit and the system is provided with second spray means for distinguishing an animal when an identification code of an animal has been determined with the read-out device whereby in use the checking unit establishes that the identification code read out is within a predetermined group of identification codes. With the aid of the second spray, an animal having an identification code that is within the predetermined group of identification codes, can be marked. This renders such animal easier to recognize.

Preferably, the first spray means and the second spray means in use dispense sprays which after being applied differ visibly from each other. Preferably, the first spray means and the second spray means in use dispense sprays having mutually different colors. In this way, animals that fall within the predetermined group of identification codes and animals with a faulty identification label can be distinguished in a relatively simple manner, for example by eye, from other animals and from each other.

In an embodiment, the first spray means and the second spray means are so disposed that they can each provide an animal standing in a same spot with a spray. Accordingly, the sprays from the first and second spray means can be dispensed efficiently, for example, simultaneously or relatively shortly after each other.

In an embodiment, the first spray means and the second spray means are disposed at a distance from each other that is less than 1.5 meters, preferably less than 1 meter, more preferably less than 0.5 meter. Preferably, the distance is less than a length of the animal. As a result, in use, for example the first and the second spray means can be operated substantially simultaneously or relatively shortly after each other.

It is further an objective of the invention to provide a method with which dispensing of feed can be improved.

To this end, the invention provides a method for individually checking animals which may each be provided with an identification label, which comprises generating an electromagnetic interrogation field while an animal to be checked is at least partly in the interrogation field, wherein the method also comprises detecting a presence of the animal with the aid of detection means and controlling, with the aid of a control system communicatively coupled with the detection means, an automatic feeder for dispensing feed at least when the animal has been detected by the detection means and, in response to the transmitted interrogation signal, no response signal generated by an identification label has been registered.

Preferably, the method is carried out with the aid of a system according to the invention.

Preferably, the method and/or the system according to the invention is applied or used to and/or in a breeding facility. This is favorable because pregnant animals are extra sensitive to a lack of feed.

The invention will now be described in more detail with reference to the, non-limiting, drawing, in which:
Fig. 1A schematically shows a top plan view of a system in a first embodiment according to the invention;
Fig. 1B shows a top plan view of a variant whereby the trough is provided with sidewalls;
Fig. 1C shows an interrogation field in a front view of the trough according to Fig. 1A or 1B;
Fig. 1D shows an example in which the detection means and the read-out unit of Fig. 1A are integrated;
Fig. 2 shows an example of an automatic feeder, such as it may be included in a system according to the invention;
Fig. 3A shows a system in a second embodiment according to the invention;
Fig. 3B shows a system in a third embodiment according to the invention;
Fig. 4A shows a top plan view of an example of a barn with the system in the second embodiment;
Fig. 4B shows a top plan view of another example of a barn of a breeding facility, provided with a system in a fourth embodiment according to the invention; and
Fig. 5 shows a top plan view of a barn of a breeding facility according to a stable concept.

In the drawing similar elements will be designated with the same reference numerals.

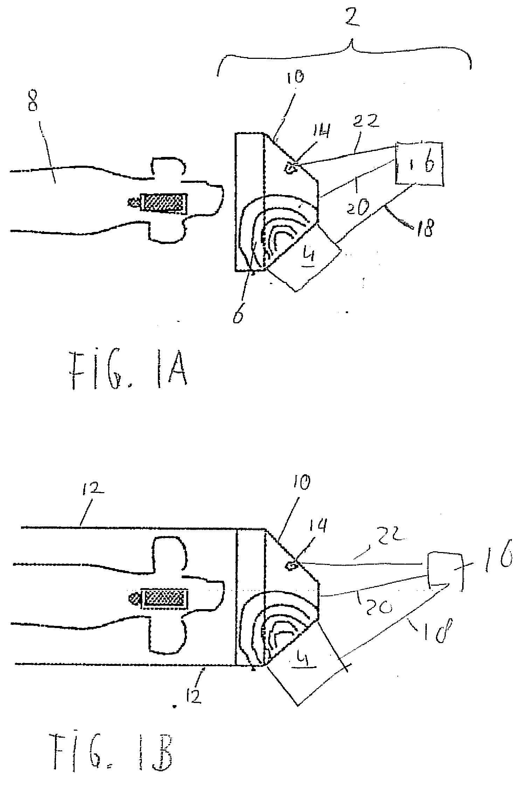

Fig. 1A schematically shows a top plan view of a system 2 in a first embodiment according to the invention. The system in the first embodiment is provided with a read-out device 4 for generating an electromagnetic interrogation field 6. Fig. 1A also shows an animal, in this example a pig 8. The pig may be provided with an identification label such as an RFID identification label (not drawn but known per se to the skilled person). This identification label, given proper operation, is suitable for generating a response signal when it is in the interrogation field 6. The read-out device can comprise an RFID reader.

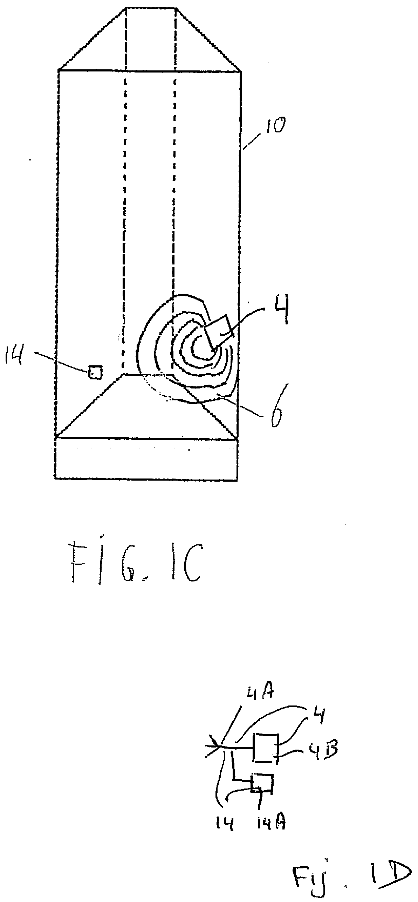

The system 2 comprises also an automatic feeder for feeding the pig 8. The automatic feeder in this example is provided with a trough 10. Fig. 1C shows the interrogation field 6 in a front view of the trough 10. In the first embodiment the read-out device 4 is configured to generate the interrogation field 6 in or above the trough 10 of the automatic feeder.

The system 2 is further provided with detection means 14 for detecting a presence of the pig 8. In this example the detection means comprise a sensor 14. The sensor 14 can be, for example, an infrared sensor which can detect the presence of the pig 8 in or above the trough 10. Alternatively, the sensor 14 can be a capacity sensor. Such examples of the sensor 14 are known per se to the skilled person so that a further description is deemed superfluous. In a variant the sensor 14 can comprise a mechanical clapper which is moved by the pig 8 itself. An embodiment in which the detection means comprise an antenna provided with the capacity sensor is considered generally favorable. In this example the sensor 14 is separate from an antenna of the read-out device. However, the sensor 14 may also be integrated with the read-out device 4, more particularly with an antenna 4A of the read-out device 4 which is coupled to a transceiver 4B of the read-out unit (see Fig. 1D). It may then be that the interrogation field that is transmitted by the read-out device 4 is disturbed by the presence of the animal. This disturbance can then also be measured with the aid of the antenna 4A (see Fig. 1D) of the read-out device 4 with which the interrogation field is transmitted. Accordingly, in that case the detection means 14 comprise the antenna 4A of the read-out device and a receiver 14A coupled thereto for detecting the disturbance of the interrogation field by the presence of the animal in the interrogation field. The disturbance can result in, for example, a change of the amplitude of the transmitted interrogation field, which amplitude change is measured by the receiver 14A and then confirms the presence of an animal.

The system 2 in the first embodiment further comprises a control system 16 which preferably comprises a processor. The control system 16 is communicatively coupled with the read-out device 4 via a communicative connection 18. The control system 16 is further communicatively connected with the automatic feeder, which connection is here schematically represented by the communicative connection 20. The control system 16 is furthermore communicatively connected with the detection means, in this example with the sensor 14, via a communicative connection 22.

The control system 16 is so configured that it controls the automatic feeder for dispensing feed when the identification label has been detected by the read-out device. Such control may be done when the identification label is in the interrogation field 6. Given proper operation, the identification label can then generate a response signal, which can be registered by the read-out device 4. After a pig 8 has thus been detected on the basis of the identification label, the control system can control the automatic feeder via the communicative connection 20 for dispensing feed. The amount of feed dispensed may be individually tuned to the detected pig 8 on the basis of a code of the identification label. To this end, a memory of the control system 16 can contain feed data and also other data of the individual pigs 8, where each pig can have a unique code. The control system 16 is so configured that when no identification label has been detected by the read-out device 4, for example, no response signal, a wrong response signal or too weak a response signal has been generated by the identification label, but the sensor 14 does detect a pig, then still a standard portion of feed is dispensed into the trough 10. In this way, a pig whose identification label is faulty or lost can still get feed. In this example, without the sensor 14 no feed would be dispensed to a pig without well-working label, because in that case, failing label detection, no pig would be detected and hence no feed would be furnished.

For the purpose of controlling the automatic feeder, more generally, the processor of the control system may be provided with control software.

In this example, the identification label is affixed to an ear button or collar of the pig 8. It will be clear that in combination with the interrogation field 6 generated in or above the trough 10, the system 2 in the first embodiment is configured to detect the presence of the pig 8 at the automatic feeder when the head of the pig is in or above the trough 10 of the automatic feeder.

The system 2 is not limited to this first embodiment. Fig. 1B shows a top plan view of a variant whereby the trough 10 is provided with sidewalls 12. Otherwise, the variant of Fig. 1B is identical to the variant according to Fig. 1A. Other variants are also conceivable. For example, more generally, the read-out device may be configured to generate the interrogation field 6 at the automatic feeder for detecting the identification label of an animal which is at the automatic feeder. The read-out device 4 is then configured to detect an identification label of an animal which is at the automatic feeder. It may be, for example, that the read-out device, in use, generates the interrogation field over dimensions within which, in the presence of an animal at the automatic feeder for eating from the automatic feeder, an identification label of the animal will be located. The interrogation field can extend, for example, over a distance greater than a length and width of the pig. Such variants afford a greater freedom in placing the identification label. The identification label may be attached, for example, to a leg band, may be injected subcutaneously, or may be provided as a stomach bolus.

The detection means are not limited to the sensor 14. Different variants of the detection means are possible, configured to detect the presence of the pig 8 at the automatic feeder. Thus, the detection means can comprise, for example, a weighing device which is placed near the automatic feeder. Preferably, the detection means are configured to detect the presence of the pig in the interrogation field.

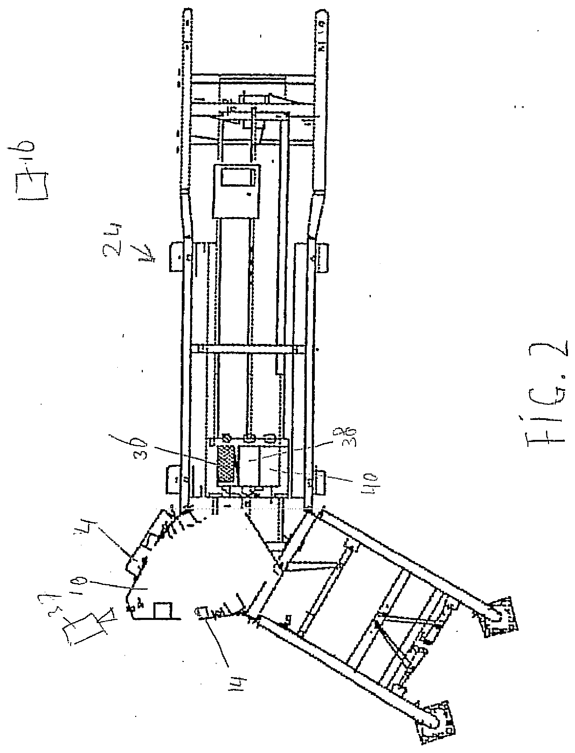

Fig. 2 shows an example of an automatic feeder 24, such as it may be included in a system according to the invention, for example the system 2 in the first embodiment. The automatic feeder 24 may be provided with the trough 10. The automatic feeder 24 may be further provided with transport means for transporting feed to the trough 10. Such transport may be dependent on a control signal generated by the control system 16 (here, for simplicity, the communicative coupling between the control system on one side and the automatic feeder, the sensor and the detection means on the other is omitted (may be wireless connections or wired connections). The same holds for the figures below).

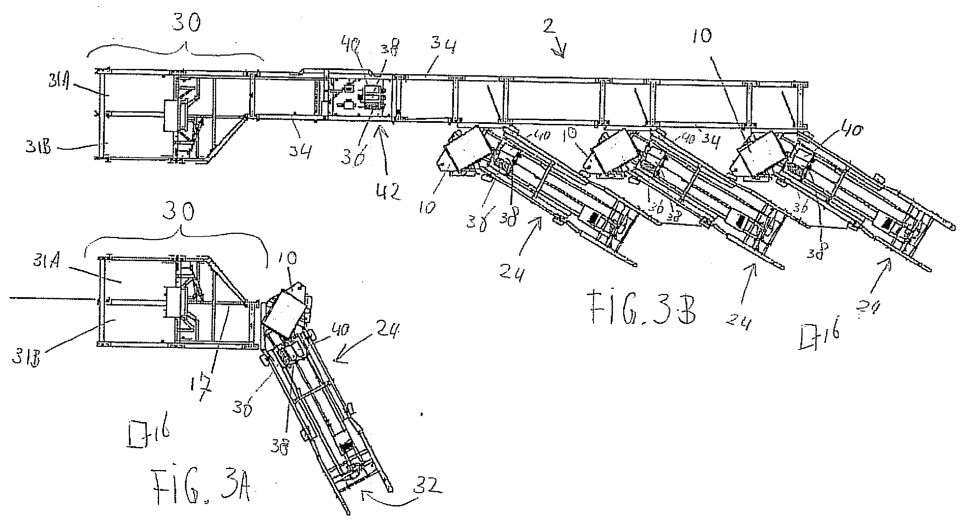

Fig. 3A shows a system 2 in a second embodiment according to the invention. In the second embodiment the system 2 is provided with the automatic feeder 24, with the detection means 14, with the control system, and with the read-out device. These may be coupled in a similar manner to that in the first embodiment.

In the second embodiment, the system 2 is further provided with distinguishing means. In this example, the distinguishing means comprise a separating unit 30 at the automatic feeder 24. In use, a pig 8 can enter the automatic feeder via an entrance 32. After the pig has eaten from the trough, it can enter the separating unit 30. The separating unit 30 is configured to distinguish a pig which, with the aid of the detection means, e.g., the sensor 14, has been detected as being present in the interrogation field 6, but from which no response signal is received by the read-out device. Accordingly, the presence of such a pig 8 at the automatic feeder 24 has been detected by the detection means 14 but not by the read-out device. Such a pig is typically provided with a faulty identification label, or has no identification label, for example, because it has lost the identification label or because the identification label (for example, by mistake) has not been affixed. With the aid of the control system, it can be recognized that such a pig 8 with a faulty identification label, or with an identification label missing, is present at the automatic feeder. With the aid of the separating unit 30 such a pig may be separated from other pigs with a well-working label. To this end, the separating unit 30 can comprise a gate 17 which is controllable, for example, by the control system 16. With this, the pig 8 having no identification label or a faulty one can be guided to a distinction space. To this end, the separating unit 30 can have a first exit 31A and a second exit 31B which lead to different spaces, one of which is the distinction space. These pigs thus separated can thereupon be provided with a well-working identification label. Also, the pig having no identification label or a faulty one is thus prevented from getting feed offered once again (since it is impossible for the animal to access the automatic feeder anymore) before this pig is provided with a well-working identification label.

In a variant of the second embodiment, the system 2 is provided with a plurality of automatic feeders 24. Each automatic feeder may be provided with the separating unit 30. Thus the system 2 may be provided with a plurality of automatic feeders 24 and a plurality of separating units 30, where each automatic feeder 24 may be associated with one of the separating units 30 and where each separating unit 30 may be associated with one of the automatic feeders. More generally, in such a variant the plurality of automatic feeders may be communicatively coupled with the control system. Also, the system 2 may then be provided with detection means 14 associated with the plurality of automatic feeders 24. The control system may then be so configured that it controls the plurality of automatic feeders for dispensing feed.

The distinguishing means can comprise, alternatively or additionally to the separating unit 30, first spray means 36 with which a pig 8 with a faulty label or without label can be provided with a colored spray. This colored spray can form a spray mark on the skin of the pig 8. Thus, through recognition of the spray mark on the pig, the pig can be distinguished from other pigs, having a well-working label. If the distinguishing means are additional to the separating unit 30, distinguishing may also be done in the distinction space. However that may be, the pigs with a spray mark can thereupon be provided with a well-working identification label. Preferably, the spray mark is removable, so that after fitting the well-working identification label the spray mark can be removed again. More generally, a spray may be used that is adapted to disappear, after 1 or 2 days, through wear, for example.

Fig. 3B shows a system 2 in a third embodiment according to the invention. In the third embodiment the system 2 is provided with the detection means, with the control system, and with the read-out device, analogously to the first and second embodiment. In the third embodiment the system 2 is further provided with a plurality of the automatic feeders 24, in this example three automatic feeders 24. The system 2 comprises also the separating unit 30 with two different exits, viz., the first exit 31A and the second exit 31B. In the third embodiment of the system 2 the separating unit 30 is coupled to the plurality of automatic feeders via gates 34. Thus, the system 2 is provided with a set of automatic feeders where each automatic feeder is associated with one and the same central separating unit 30. In this way, the number of separating units 30 can be reduced with respect to a situation where a separate separating unit 30 is provided for each automatic feeder 24.

In the first, second and third embodiment, each feeding station 24 may be provided with the first spray means 36. Thus, each automatic feeder 24 may be associated with one of the first spray means 36.

The system 2 in the first, second and/or third embodiment may also be provided with second spray means 38. An automatic feeder 24, for example, each automatic feeder 24 of the plurality of automatic feeders 24, may be further provided with the second spray means 38. These can be used for distinguishing the pig 8 when an identification code of a pig, determined with the read-out device 4, is within a predetermined group of identification codes. Whether this is so, can be established, for example, with the aid of the read-out device 4. The identification codes of the predetermined group are, for example, stored in a memory of the read-out device. The read-out device can then, when an identification code has been read out, determine whether this read-out identification code belongs to the predetermined group. It can also be established with the aid of the control system 16 whether an identification code read out with the read-out device belongs to the predetermined group. The identification codes of the predetermined group are, for example, stored in a memory of the control system. The control system can then, when an identification code has been read out with the read-out device, determine whether this read-out identification code belongs to the predetermined group, for example with the aid of the processor of the control system 16. The predetermined group can be, for example, a group of estrous pigs 8 or a group of pigs 8 that are to be guided to a farrowing pen.

Preferably, the first spray means and the second spray means in use dispense sprays which after being applied differ visibly from each other. The first spray means and the second spray means, in use, can dispense, for example, sprays having mutually different colors. In this way, the pigs having a faulty identification label or none, can be distinguished from the pigs having an identification label with a code that is within the predetermined group of identification codes.

Analogously to the second spray means, the system 2 may also be provided with third spray means 40. With the aid of the third spray means, pigs having an identification label with an identification code that is within another group of identification codes can be distinguished. It may also happen, for that matter, that the pig 8 receives a spray both from the second and from the third spray means.

In the first, second, and third embodiment, the first, second and third spray means may be disposed in mutual proximity, e.g., next to each other. It will thus be clear that the first spray means and the second spray means may be so disposed that they can each provide a pig that is standing in a same place with a spray. The first spray means and the second spray means are preferably disposed at a mutual distance that is less than 1.5 meters, preferably less than 1 meter, more preferably less than 0.5 meter. The distance between the first and the second spray means can be, for example, less than a length and/or width of the pig 8.

Further, the system 2 may be provided with a spray station 42, as shown in Fig. 3B. The spray station 42 may be provided above a path which is defined by the gates 34 and through which the pigs 8 can pass after eating in the automatic feeders 24. Thus the system 2 in Fig. 3B is provided with at least a set of automatic feeders 24 where each automatic feeder may be associated with one and the same first spray means of the first spray means of the spray station 42 and one and the same second spray means of the second spray means of the spray station 42.

It will hence be clear that, as e.g. in the system in the third embodiment, the system may be provided with a plurality of automatic feeders and a plurality of first spray means and a plurality of second spray means. Different automatic feeders may then be respectively associated with different first spray means and different second spray means.

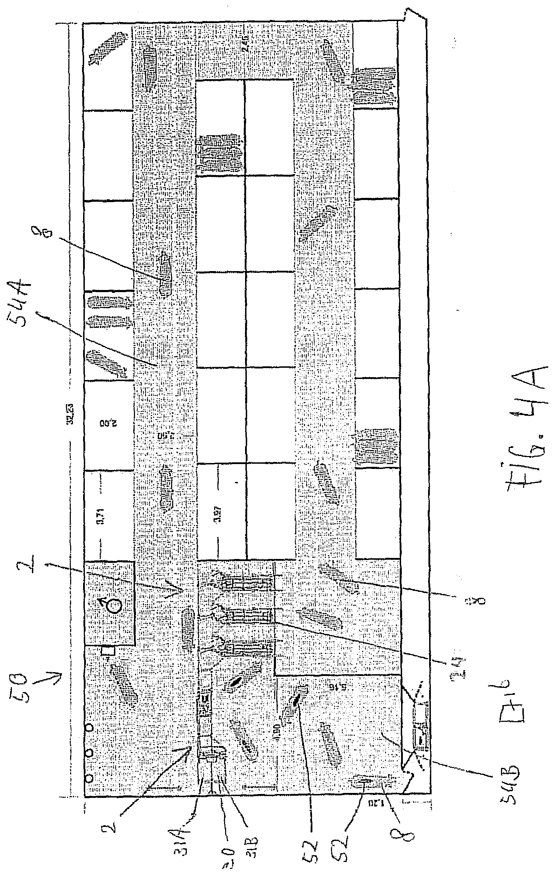

The system 2 in one of the embodiments described can be used in a barn 50 of a breeding facility. Fig. 4A shows a top plan view of an example of such a barn with the system 2 in the third embodiment. In Fig. 4A a number of pigs 8 are visible, some of which are provided with the spray mark 52. The spray marks 52 in this example may be applied in two or three different colors. By means of the first exit 31A and the second exit 31B of the separating unit 30 the pigs can be guided to, respectively, a first space 54A and a second space 54B of the barn 50. In the example of Fig. 4A the pigs 8 with the spray marks 52 are gathered in the second space 54B, and the pigs 8 without spray mark 52 are gathered in the first space 54A. The second space 54B is an example of the distinction space.
The groups involved here are referred to as dynamic groups of animals because animals can be removed from a group with the aid of the distinguishing means in the form of the separating unit 30. In pig farming also reference is made to a dynamic group of animals.

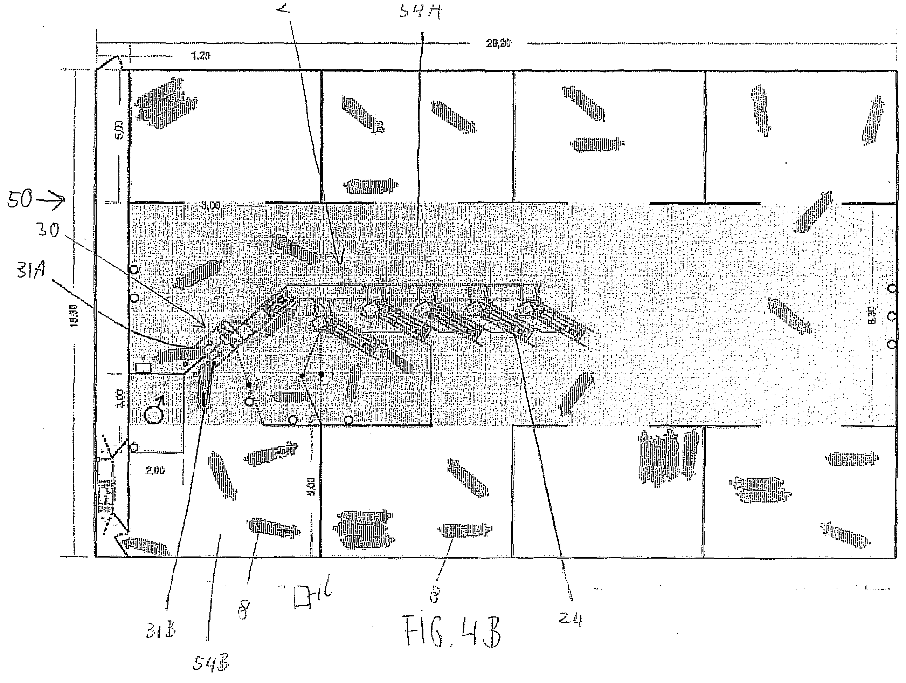

Fig. 4B shows a top plan view of another example of a barn 50 of a breeding facility, provided with a system 2 in a fourth embodiment according to the invention. In the fourth embodiment the system is provided with five automatic feeders 24. Also, the system 2 is here provided with the central separating unit 30.

The barn 50 shown in Figs. 4A and 4B is suitable for a dynamic concept. In such a concept, e.g. daily, weekly or monthly, pigs can be added and/or removed. The pigs 8 can hence form a dynamic group.

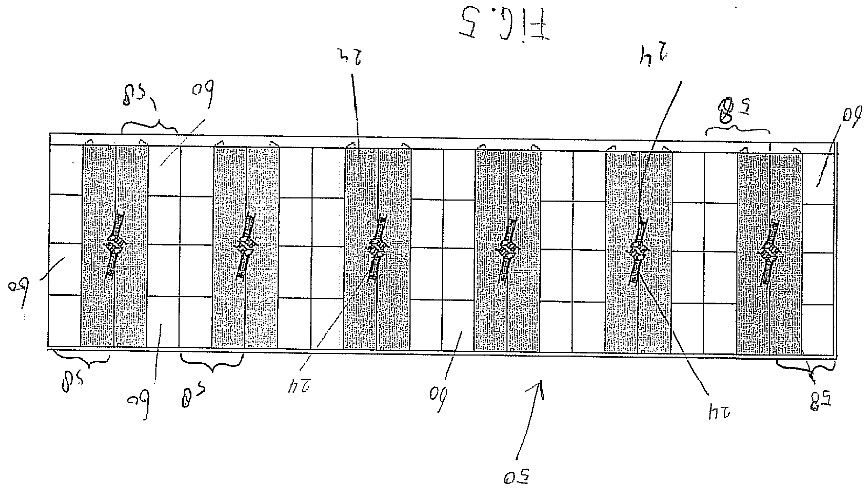

Fig. 5 shows a top plan view of a barn 50 of a breeding facility according to a stable concept. The groups of animals involved are referred to as static or stable groups of animals because animals cannot be removed from a group by the system. In pig farming also reference is made to stable groups. In such a concept, for multiple days, e.g. for at least a week or during a breeding cycle, no pigs are added and/or removed. Accordingly, the pigs can then form a stable group. The barn 50 in this example is provided with twelve automatic feeders 24 and twelve spaces 58, each provided with four stalls 60. It will be clear that a different number of automatic feeders, spaces, and/or stalls is also possible. Each space in this example is populated by a stable group of, for example, forty pigs. Each space 58 may be provided with the system 2 in the first embodiment provided with the automatic feeder according to Fig. 2. If the pigs are pork pigs (the facility then isn't a breeding facility), a group can consist of, for example, 12 pigs up to as many as 600 pigs with multiple automatic feeders as in Fig. 1 and/or Fig. 2. Otherwise, the barn 50 may be the same as for breeding pigs.

The system 2 in one of the embodiments described can be used in a first embodiment of a method according to the invention (the first method). The first method can comprise generating an electromagnetic interrogation field with the aid of the read-out device 4 while a pig 8 to be checked is in the interrogation field. The first method can also comprise detecting a presence of a pig 8 with the aid of the detection means, for example, the sensor 14. The first method can also comprise controlling an automatic feeder with the aid of the control system 16 communicatively coupled with the detection means, for dispensing feed when the pig 8 has been detected by the detection means and in response to the transmitted interrogation signal no response signal generated by an identification label has been registered, for example, due to the pig 8 being provided with a faulty identification label or not being provided with an identification label. The first method can be carried out, for example, in the barn 50 of the breeding facility.

It is assumed that the construction and operation of the invention appears from the above description. The invention is not limited by any of the embodiments described. For example, the system may be further provided with a camera 37 (Fig. 2) which is communicatively connected with the control system 16 for recognizing a spray which has been applied to the animal with the spray means 36 when the animal is at the automatic feeder 24, wherein the control system is so configured that it does not control the automatic feeder for dispensing feed when the animal has been detected by the detection means 14 and no identification label has been detected by the read-out device 4, wherein the spray on the animal is detected with the camera. This prevents an animal whose identification code cannot be read out from getting feed every time it is at the automatic feeder. This is especially relevant in the static groups (Fig. 5), since in the static groups an animal can repeatedly return to the automatic feeder and then be given feed repeatedly when the identification code of the animal cannot be read out. This is not an issue in the dynamic groups because there animals whose identification code cannot be determined are removed from the group: once removed from the group, an animal cannot go the automatic feeder again and be given feed because the identification code of the animal cannot be read out (see Figs. 4A and 4B).

Further, the system 2 is also suitable for other animals than pigs (breeding animals, pork pigs, rearing sows), such as cows, goats, horses, poultry, and the like. The use of expressions such as "preferably", "in particular", "typically", etc., is not intended to limit the invention. The indefinite article 'a(n)' does not exclude plurality. With the knowledge of the skilled person, possible changes in the embodiments may be understood to fall within the scope of the appended claims. Also, all kinematic inversions are understood to be disclosed and to be within the invention.

## Claims

1. A system (2) for individually checking animals (8) which may each be provided with an identification label, wherein the system (2) is provided with at least a read-out device (4) for generating an electromagnetic interrogation field (6) and registering a response signal generated by an identification label when the label is in the interrogation field, wherein the system (2) is further provided with at least an automatic feeder (24,10) for feeding an animal (8) and a control system (16) which is communicatively coupled (18,20) with the read-out device (4) and the automatic feeder (24,10), wherein the control system (16) is so configured that it controls the automatic feeder (24,10) for dispensing feed when, at least, an identification label has been detected by the read-out device (4), wherein the system (2) is furthermore provided with detection means (14) for detecting a presence of the animal (8), wherein the control system (16) is further communicatively coupled (22) with the detection means (14) and is so configured that it generally also controls the automatic feeder (24,10) for dispensing feed when the animal (8) has been detected by the detection means (14) and no identification label has been detected by the read-out device (4).

2. A system (2) according to claim 1, **characterized in that** the read-out device (4) is configured to detect an identification label of an animal (8) which is at the automatic feeder (24,10).

3. A system (2) according to any one of the preceding claims, **characterized in that** the read-out device (4), in use, generates the interrogation field (6) over dimensions within which, in the presence of an animal (8) at the automatic feeder (24,10) for eating from the automatic feeder, an identification label of the animal will be located.

4. A system (2) according to any one of the preceding claims, **characterized in that** the read-out device (4) is configured to generate an interrogation field (6) at the automatic feeder (24,10) for detecting an identification label of an animal which is at the automatic feeder.

5. A system (2) according to any one of the preceding claims, **characterized in that** the read-out device (4) is configured to generate an interrogation field (6) in or above the trough (10) of the automatic feeder (24,10).

6. A system (2) according to any one of the preceding claims, **characterized in that** the detection means (14) are configured to detect the presence of an animal (8) at the automatic feeder (24,10).

7. A system (2) according to claim 6, **characterized in that** the detection means (14) are configured to detect the presence of an animal (8) at the automatic feeder (24,10) when the head of an animal is in or above a trough (10) of the automatic feeder (24,10).

8. A system (2) according to any one of the preceding claims, **characterized in that** the detection means (14) are configured to detect the presence of an animal (8) in the interrogation field (6).

9. A system (2) according to any one of the preceding claims, **characterized in that** the system is further provided with distinguishing means (30,36) which are configured to distinguish an animal which has been detected with the aid of the detection means (14) as being in the interrogation field (6) and from which no response signal is received by the read-out device (4).

10. A system (2) according to claim 9, **characterized in that** the system is provided with a plurality of automatic feeders (24,10) and a plurality of distinguishing means (30,36) wherein each automatic feeder is associated with one of the distinguishing means and wherein each distinguishing means is associated with one of the automatic feeders and/or wherein different automatic feeders are respectively associated with different distinguishing means.

11. A system (2) according to claim 9 or 10, **characterized in that** the system is provided with at least a set of automatic feeders (24,10), each automatic feeder being associated with one and the same distinguishing means (30,36).

12. A system (2) according to any one of claims 9-11, **characterized in that** the distinguishing means (30,36) comprise a controllable gate (17) with which an animal, for distinguishing the animal, can be guided to a distinction space.

13. A system (2) according to any one of claims 9-12, **characterized in that** the distinguishing means (30,36) comprise first spray means (36) with which an animal, for distinguishing the animal (8), can be provided with a colored spray.

14. A system (2) according to claim 13, **characterized in that** the system is provided with second spray means (38) for distinguishing an animal when an identification code of an animal has been determined with the read-out device (4), wherein in use the control system (16) establishes that the read-out identification code is within a predetermined group of identification codes.

15. A system (2) according to claims 13 and 14, **characterized in that** the first spray means (36) and the second spray means (38) in use dispense sprays which after being applied differ visibly from each other.

16. A system (2) according to claims 13 and 14 or according to claim 15, **characterized in that** the first spray means (36) and the second spray means (38) in use dispense sprays having mutually different colors.

17. A system (2) according to claims 13 and 14 or according to claim 15 or 16, **characterized in that** the first spray means (36) and the second spray means (38) are so disposed that they can each provide an animal standing in a same place with a spray.

18. A system (2) according to claims 13 and 14 or according to claim 15, 16, or 17, **characterized in that** the first spray means (36) and the second spray means (38) are disposed at a distance from each other that is less than 1.5 meters, preferably less than 1 meter, more preferably less than 0.5 meter.

19. A system (2) according to any one of claims 13-18, **characterized in that** the system is provided with a plurality of automatic feeders (24,10) and a plurality of first spray means (36) and/or a plurality of second spray means (38) wherein each automatic feeder is associated with one of the first spray means and/or one of the second spray means wherein each first spray means and/or each second spray means is associated with one of the automatic feeders and/or wherein different automatic feeders are respectively associated with different first spray means and/or different second spray means.

20. A system (2) according to any one of claims 13-18, **characterized in that** the system is provided with at least a set of automatic feeders (24,10) wherein each automatic feeder is associated with one and the same first spray means (36) and/or one and the same second spray means (38).

21. A system (2) according to claim 13, **characterized in that** the system is further provided with a camera (37) which is communicatively connected with the control system (16) for recognizing a spray (52) which has been applied to the animal when the animal is at the automatic feeder (24,10), wherein the control system is so configured that it does not control the automatic feeder for dispensing feed when the animal has been detected by the detection means and no identification label has been detected by the read-out device, wherein the spray on the animal is detected with the camera.

22. A method for individually checking animals (8) which may each be provided with an identification label, which comprises generating an electromagnetic interrogation field (6) while an animal to be checked is at least partly in the interrogation field, wherein the method also comprises detecting a presence of the animal with the aid of detection means (14) and controlling, with the aid of a control system (16) communicatively coupled (22) with the detection means, an automatic feeder (24,10) for dispensing feed at least when the animal has been detected by the detection means and, in response to the transmitted interrogation signal, no response signal generated by an identification label has been registered.

23. A method according to claim 22, carried out with the aid of a system according to any one of claims 1-21.

24. A method according to claim 22 or 23 applied to or in a breeding facility (50).

## Patentansprüche

1. System (2) zur individuellen Überprüfung von Tieren (8), die jeweils mit einem Identifikationsetikett versehen sein können, wobei das System (2) mit mindestens einer Ablesevorrichtung (4) versehen ist, um ein elektromagnetisches Abfragefeld (6) zu erzeugen und ein Antwortsignal, erzeugt von einem Identifikationsetikett, zu erfassen, wenn sich das Etikett in dem Abfragefeld befindet, wobei das System (2) ferner mit mindestens einem automatischen Futterspender (24, 10) zum Füttern eines Tieres (8) und einem Steuersystem (16), das kommunikativ mit der Ablesevorrichtung (4) und dem automatischen Futterspender (24, 10) gekoppelt ist (18, 20), versehen ist, wobei das Steuersystem (16) so konfiguriert ist, dass es den automatischen Futterspender (24, 10) zum Ausgeben von Futter steuert, wenn mindestens ein Identifikationsetikett von der Ablesevorrichtung (4) erkannt wurde, wobei das System (2) ferner mit Erkennungsmitteln (14) zum Erkennen der Anwesenheit des Tieres (8) versehen ist, wobei das Steuersystem (16) ferner kommunikativ mit den Erkennungsmitteln (14) gekoppelt ist (22) und so konfiguriert ist, dass es allgemein auch den automatischen Futterspender (24, 10) zum Ausgeben von Futter steuert, wenn das Tier (8) von den Erkennungsmitteln (14) erkannt wurde und kein Identifikationsetikett von der Ablesevorrichtung (4) erkannt wurde.

2. System (2) nach Anspruch 1, **dadurch gekennzeichnet, dass** die Ablesevorrichtung (4) dafür konfiguriert ist, ein Identifikationsetikett eines Tieres (8), das sich an dem automatischen Futterspender (24, 10) befindet, zu erkennen.

3. System (2) nach einem der vorhergehenden Ansprüche, **dadurch gekennzeichnet, dass** die Ablesevorrichtung (4) bei Verwendung das Abfragefeld (6) über Dimensionen, innerhalb derer, in Anwesenheit eines Tieres (8) an dem automatischen Futterspender (24, 10) zum Fressen von dem automatischen Futterspender, ein Identifikationsetikett des Tiers geortet wird.

4. System (2) nach einem der vorhergehenden Ansprüche, **dadurch gekennzeichnet, dass** die Ablesevorrichtung (4) dafür konfiguriert ist, ein Abfragefeld (6) an dem automatischen Futterspender (24, 10) zu erzeugen, um ein Identifikationsetikett eines Tieres an dem automatischen Futterspender zu erkennen.

5. System (2) nach einem der vorhergehenden Ansprüche, **dadurch gekennzeichnet, dass** die Ablesevorrichtung (4) dafür konfiguriert ist, ein Abfragefeld (6) in oder über dem Trog (10) des automatischen Futterspenders (24, 10) zu erzeugen.

6. System (2) nach einem der vorhergehenden Ansprüche, **dadurch gekennzeichnet, dass** die Erkennungsmittel (14) dafür konfiguriert sind, die Anwesenheit eines Tieres (8) an dem automatischen Futterspender (24, 10) zu erkennen.

7. System (2) nach Anspruch 6, **dadurch gekennzeichnet, dass** die Erkennungsmittel (14) dafür konfiguriert sind, die Anwesenheit eines Tieres (8) an dem automatischen Futterspender (24, 10) zu erkennen, wenn der Kopf eines Tieres sich in oder über einem Trog (10) des automatischen Futterspenders (24, 10) befindet.

8. System (2) nach einem der vorhergehenden Ansprüche, **dadurch gekennzeichnet, dass** die Erkennungsmittel (14) dafür konfiguriert sind, die Anwesenheit eines Tieres (8) in dem Abfragefeld (6) zu erkennen.

9. System (2) nach einem der vorhergehenden Ansprüche, **dadurch gekennzeichnet, dass** das System ferner mit Unterscheidungsmitteln (30, 36) versehen ist, die dafür konfiguriert sind, ein Tier zu unterscheiden, für das mithilfe der Erkennungsmittel (14) erkannt wurde, dass es sich in dem Abfragefeld (6) befindet und von dem kein Antwortsignal von der Ablesevorrichtung (4) empfangen wird.

10. System (2) nach Anspruch 9, **dadurch gekennzeichnet, dass** das System mit mehreren automatischen Futterspendern (24, 10) und mehreren Unterscheidungsmitteln (30, 36) versehen ist, wobei jeder automatische Futterspender mit einem der Unterscheidungsmittel assoziiert ist und wobei jedes Unterscheidungsmittel mit einem der automatischen Futterspender assoziiert ist und/oder wobei verschiedene automatische Futterspender jeweils mit verschiedenen Unterscheidungsmitteln assoziiert sind.

11. System (2) nach Anspruch 9 oder 10, **dadurch gekennzeichnet, dass** das System mit mindestens einem Satz automatischer Futterspender (24, 10) versehen ist, wobei jeder automatische Futterspender mit ein und denselben Unterscheidungsmitteln (30, 36) assoziiert ist.

12. System (2) nach einem der Ansprüche 9-11, **dadurch gekennzeichnet, dass** die Unterscheidungsmittel (30, 36) ein steuerbares Gatter (17) umfassen, mit dem ein Tier zur Unterscheidung des Tieres zu einem Unterscheidungsplatz geleitet werden kann.

13. System (2) nach einem der Ansprüche 9-12, **dadurch gekennzeichnet, dass** die Unterscheidungsmittel (30, 36) erste Sprühmittel (36) umfassen, mit denen ein Tier zur Unterscheidung des Tieres (8) mit einem Farbspray versehen werden kann.

14. System (2) nach Anspruch 13, **dadurch gekennzeichnet, dass** das System mit zweiten Sprühmitteln (38) zur Unterscheidung eines Tieres versehen ist, wenn ein Identifikationscode eines Tieres mit der Ablesevorrichtung (4) bestimmt wurde, wobei bei Verwendung das Steuersystem (16) nachweist, dass der Ableseidentifikationscode innerhalb einer vorbestimmten Gruppe von Identifikationscodes ist.

15. System (2) nach den Ansprüchen 13 und 14, **dadurch gekennzeichnet, dass** die ersten Sprühmittel (36) und die zweiten Sprühmittel (38) bei Verwendung Sprays abgeben, die sich nach der Anwendung sichtbar voneinander unterscheiden.

16. System (2) nach den Ansprüchen 13 und 14 oder nach Anspruch 15, **dadurch gekennzeichnet, dass** die ersten Sprühmittel (36) und die zweiten Sprühmittel (38) bei Verwendung Sprays abgeben, die sich farblich voneinander unterscheiden.

17. System (2) nach den Ansprüchen 13 und 14 oder nach Anspruch 15 oder 16, **dadurch gekennzeichnet, dass** die ersten Sprühmittel (36) und die zweiten Sprühmittel (38) so angeordnet sind, dass sie jeweils ein Tier, das an derselben Stelle steht, mit einem Spray versehen können.

18. System (2) nach den Ansprüchen 13 und 14 oder nach Anspruch 15, 16 oder 17, **dadurch gekennzeichnet, dass** die ersten Sprühmittel (36) und die zweiten Sprühmittel (38) in einem Abstand voneinander angeordnet sind, der weniger als 1,5 Meter, bevorzugt weniger als 1 Meter, bevorzugter weniger als 0,5 Meter beträgt.

19. System (2) nach einem der Ansprüche 13-18, **dadurch gekennzeichnet, dass** das System mit mehreren automatischen Futterspendern (24, 10) und mehreren ersten Sprühmitteln (36) und/oder mehreren zweiten Sprühmitteln (38) versehen ist, wobei jeder automatische Futterspender mit einem der ersten Sprühmittel und/oder einem der zweiten Sprühmittel versehen ist, wobei jedes erste Sprühmittel und/oder jedes zweite Sprühmittel mit einem der automatischen Futterspender assoziiert ist und/oder wobei verschiedene automatische Futterspender jeweils mit verschiedenen ersten Sprühmitteln und/oder verschiedenen zweiten Sprühmitteln assoziiert sind.

20. System (2) nach einem der Ansprüche 13-18, **dadurch gekennzeichnet, dass** das System mit mindestens einem Satz automatischer Futterspender (24, 10) versehen ist, wobei jeder automatische Futterspender mit ein und denselben ersten Sprühmitteln (36) und/oder ein und denselben zweiten Sprühmitteln (38) assoziiert ist.

21. System (2) nach Anspruch 13, **dadurch gekennzeichnet, dass** das System ferner mit einer Kamera (37) versehen ist, die kommunikativ mit dem Steuersystem (16) verbunden ist, um ein Spray zu erkennen (52), das auf dem Tier angebracht wurde, als sich das Tier an dem automatischen Futterspender (24, 10) befand, wobei das Steuersystem so konfiguriert ist, dass es den automatischen Futterspender zur Abgabe von Futter nicht steuert, wenn das Tier von den Erkennungsmitteln erkannt wurde und kein Identifikationsetikett von der Ablesevorrichtung erkannt wurde, wobei das Spray auf dem Tier mit der Kamera entdeckt wird.

22. Verfahren zur individuellen Überprüfung von Tieren (8), die jeweils mit einem Identifikationsetikett versehen sein können, umfassend die Erzeugung eines elektromagnetischen Abfragefeldes (6) während sich ein zu überprüfendes Tier zumindest teilweise in dem Abfragefeld befindet, wobei das Verfahren ebenfalls umfasst, dass eine Anwesenheit des Tieres mithilfe von Erkennungsmitteln (14) erkannt wird, und mithilfe eines Steuersystems (16), das kommunikativ (22) mit den Erkennungsmitteln gekoppelt ist, ein automatischer Futterspender (24, 10) gesteuert wird zur Abgabe von Futter, zumindest wenn das Tier von den Erkennungsmitteln erkannt wurde, und, in Reaktion auf das übertragene Abfragesignal, kein Antwortsignal, erzeugt von einem Identifikationsetikett, registriert wurde.

23. Verfahren nach Anspruch 22, ausgeführt mithilfe eines Systems nach einem der Ansprüche 1-21.

24. Verfahren nach Anspruch 22 oder 23, angewendet auf oder in einer Züchtungsanlage (50).

## Revendications

1. Un système (2) pour contrôler individuellement des animaux (8) qui peuvent être munis chacun d'une étiquette d'identification, le système (2) étant muni d'au moins un dispositif de lecture (4) pour générer un champ d'interrogation électromagnétique (6) et enregistrer un signal de réponse généré par une étiquette d'identification lorsque l'étiquette est dans le champ d'interrogation, le système (2) étant en outre muni d'au moins un distributeur de nourriture (24, 10) pour alimenter un animal (8) et d'un système de commande (16) qui est relié de façon communicative (18, 20) au dispositif de lecture (4) et au distributeur automatique de nourriture (24, 10), le système de commande (16) étant configuré de façon à commander le distributeur automatique de nourriture (24, 10) pour distribuer de la nourriture lorsque, au moins, une étiquette d'identification a été détectée par le dispositif de lecture (4), le système (2) étant muni en outre de moyens de détection (14) pour détecter la présence d'un animal (8), le système de commande (16) étant en outre couplé de façon communicative (22) aux moyens de détection (14) et étant configuré de façon à commander généralement aussi le distributeur automatique de nourriture (24, 10) pour distribuer de la nourriture lorsque l'animal (8) a été détecté par les moyens de détection (14) et qu'aucune étiquette d'identification n'a été détectée par le dispositif de lecture (4).

2. Un système (2) selon la revendication 1, **caractérisé en ce que** le dispositif de lecture (4) est configuré pour détecter une étiquette d'identification d'un animal (8) qui se trouve au niveau du distributeur automatique de nourriture (24, 10).

3. Un système (2) selon l'une quelconque des revendications précédentes, **caractérisé en ce que**, en service, le dispositif de lecture (4) génère le champ d'interrogation (6) selon des dimensions à l'intérieur desquelles, en présence d'un animal (8) au niveau du distributeur automatique de nourriture (24, 10) pour s'alimenter au distributeur automatique de nourriture, une étiquette d'identification de l'animal est localisée.

4. Un système (2) selon l'une quelconque des revendications précédentes, **caractérisé en ce que** le dispositif de lecture (4) est configuré pour générer un champ d'interrogation (6) au niveau du distributeur automatique de nourriture (24, 10) afin de détecter une étiquette d'identification d'un animal qui se trouve au niveau du distributeur automatique de nourriture.

5. Un système (2) selon l'une quelconque des revendications précédentes, **caractérisé en ce que** le dispositif de lecture (4) est configuré pour générer un champ d'interrogation (6) dans ou au-dessus de l'auge (10) du distributeur automatique de nourriture (24, 10).

6. Un système (2) selon l'une quelconque des revendications précédentes, **caractérisé en ce que** les moyens de détection (14) sont configurés pour détecter la présence d'un animal (8) au niveau du distributeur automatique de nourriture (24, 10).

7. Un système (2) selon la revendication 6, **caractérisé en ce que** les moyens de détection (14) sont configurés pour détecter la présence d'un animal (8) au niveau du distributeur automatique de nourriture (24, 10) lorsque la tête d'un animal se trouve dans ou au-dessus d'une auge (10) du distributeur automatique de nourriture (24, 10).

8. Un système (2) selon l'une quelconque des revendications précédentes, **caractérisé en ce que** les moyens de détection (14) sont configurés pour détecter la présence d'un animal (8) dans le champ d'interrogation (6).

9. Un système (2) selon l'une quelconque des revendications précédentes, **caractérisé en ce que** le système est muni en outre de moyens de distinction (30, 36) qui sont configurés pour distinguer un animal qui a été détecté à l'aide des moyens de détection (14) comme se trouvant dans le champ d'interrogation (6) et dont aucun signal de réponse n'est reçu par le dispositif de lecture (4).

10. Un système (2) selon la revendication 9, **caractérisé en ce que** le système est muni d'une pluralité de distributeurs automatiques de nourriture (24, 10) et d'une pluralité de moyens de distinction (30, 36), chaque distributeur automatique de nourriture étant associé à un des moyens de distinction et chaque moyen de distinction étant associé à un des distributeurs automatiques de nourriture et/ou des distributeurs automatiques de nourriture différents étant associés respectivement à des moyens de distinction différents.

11. Un système (2) selon la revendication 9 ou 10, **caractérisé en ce que** le système est muni d'au moins un ensemble de distributeurs automatiques de nourriture (24, 10), chaque distributeur automatique de nourriture étant associé à un seul et unique moyen de distinction (30, 36).

12. Un système (2) selon l'une quelconque des revendications 9 à 11, **caractérisé en ce que** les moyens de distinction (30, 36) comprennent une porte commandée (17) par laquelle un animal, pour distinguer l'animal, peut être guidé vers un espace de distinction.

13. Un système (2) selon l'une quelconque des revendications 9 à 12, **caractérisé en ce que** les moyens de distinction (30, 36) comprennent des premiers moyens de pulvérisation (36) avec lesquels un animal, pour distinguer l'animal (8), peut recevoir une pulvérisation colorée.

14. Un système (2) selon la revendication 13, **caractérisé en ce que** le système est muni de seconds moyens de pulvérisation (38) pour distinguer un animal lorsqu'un code d'identification d'un animal a été déterminé avec le dispositif de lecture (4), le système de commande (16) attestant, en service, que le code d'identification lu se trouve parmi un groupe prédéterminé de codes d'identification.

15. Un système (2) selon les revendications 13 et 14, **caractérisé en ce que**, en service, les premiers moyens de pulvérisation (36) et les seconds moyens de pulvérisation (38) distribuent des pulvérisations qui, après avoir été appliquées, diffèrent visiblement l'une de l'autre.

16. Un système (2) selon les revendications 13 et 14 ou selon la revendication 15, **caractérisé en ce que**, en service, les premiers moyens de pulvérisation (36) et les seconds moyens de pulvérisation (38) distribuent des pulvérisations possédant des couleurs différentes les unes des autres.

17. Un système (2) selon les revendications 13 et 14 ou selon la revendication 15 ou 16, **caractérisé en ce que** les premiers moyens de pulvérisation (36) et les seconds moyens de pulvérisation (38) sont disposés de façon à pouvoir fournir chacun une pulvérisation à un animal se tenant à un même endroit.

18. Un système (2) selon les revendications 13 et 14 ou selon la revendication 15, 16 ou 17, **caractérisé en ce que** les premiers moyens de pulvérisation (36) et les seconds moyens de pulvérisation (38) sont disposés à une distance mutuelle qui est inférieure à 1,5 mètre, de préférence inférieure à 1 mètre, plus préférablement inférieure à 0,5 mètre.

19. Un système (2) selon l'une quelconque des revendications 13 à 18, **caractérisé en ce que** le système est muni d'une pluralité de distributeurs automatiques de nourriture (24, 10) et d'une pluralité de premiers moyens de pulvérisation (36) et/ou d'une pluralité de seconds moyens de pulvérisation (38), chaque distributeur automatique de nourriture étant associé à un des premiers moyens de pulvérisation et/ou à un des seconds moyens de pulvérisation, chaque premier moyen de pulvérisation et/ou chaque second moyen de pulvérisation étant associé à un des distributeurs automatiques de nourriture et/ou des distributeurs automatiques de nourriture différents étant associés respectivement à des premiers moyens de pulvérisation différents et/ou à des seconds moyens de pulvérisation différents.

20. Un système (2) selon l'une quelconque des revendications 13 à 18, **caractérisé en ce que** le système est muni d'au moins un ensemble de distributeurs automatiques de nourriture (24, 10), chaque distributeur automatique de nourriture étant associé à un seul et unique premier moyen de pulvérisation (36) et/ou à un seul et unique second moyen de pulvérisation (38).

21. Un système (2) selon la revendication 13, **caractérisé en ce que** le système est muni en outre d'une caméra (37) qui est reliée de façon communicative au système de commande (16) pour reconnaître une pulvérisation (52) qui a été appliquée sur l'animal lorsque l'animal se trouve au niveau du distributeur automatique de nourriture (24, 10), le système de commande étant configuré de façon à ne pas commander le distributeur automatique de nourriture pour distribuer de la nourriture lorsque l'animal a été détecté par les moyens de détection et qu'aucune étiquette d'identification n'a été détectée par le dispositif de lecture, la pulvérisation sur l'animal étant détectée par la caméra.

22. Un procédé pour contrôler individuellement des animaux (8) qui peuvent être munis chacun d'une étiquette d'identification, consistant à générer un champ d'interrogation électromagnétique (6) pendant qu'un animal à contrôler se trouve au moins partiellement dans le champ d'interrogation, le procédé consistant également à détecter une présence de l'animal à l'aide de moyens de détection (14) et à commander, à l'aide d'un système de commande (16) couplé de façon communicative (22) aux moyens de détection, un distributeur automatique de nourriture (24, 10) pour distribuer de la nourriture au moins lorsque l'animal a été détecté par les moyens de détection et que, en réponse au signal d'interrogation transmis, aucun signal de réponse généré par une étiquette d'identification n'a été enregistré.

23. Un procédé selon la revendication 22, réalisé à l'aide d'un système selon l'une quelconque des revendications 1 à 21.

24. Un procédé selon la revendication 22 ou 23 appliqué à ou dans un site d'élevage (50).
